# EUROPEAN PATENT SPECIFICATION

(11) **EP 2 137 396 B1**
(45) Date of publication and mention of the grant of the patent: **10.06.2015**
(21) Application number: 08737460.9
(22) Date of filing: 17.04.2008
(51) Int. Cl.: F02M 21/02, G05D 16/20

(54) **REGULATOR AND METHOD FOR REGULATING THE PRESSURE OF A FLUID**
REGLER UND VERFAHREN ZUR DRUCKREGELUNG BEI EINER FLÜSSIGKEIT
RÉGULATEUR ET PROCÉDÉ POUR RÉGLER LA PRESSION D'UN FLUIDE

(30) Priority: 17.04.2007 IT MO20070133
(43) Date of publication of application: 30.12.2009
(73) Proprietor: Landi Renzo S.p.a., 42025 Cavriago (IT)
(72) Inventor: ALBARINI, Viliam, 42100 Massenzatico (RE) (IT); CARABELLI, Stefano, 10054 Cesana Torinese (TO) (IT); SANGREGORIO, Ercole, 80074 Ischia (NA) (IT); TONOLI, Andrea, 10051 Avigliana (TO) (IT); ZENERINO, Enrico, Cesare, 10010 Rueglio (TO) (IT)
(74) Representative: Gotra, Stefano
(86) International application number: PCT/IB2008/000933
(87) International publication number: WO 2008/125970

(56) References cited:
- EP-A- 1 388 658
- SU-A1- 598 039
- US-A- 5 636 653
- US-A1- 2001 054 967
- US-A1- 2004 261 551
- US-A1- 2007 057 096

## Description

The invention relates to a regulator, and a method, for regulating the pressure of a fluid.

In particular, the invention relates to a usable regulator, and to an applicable method, in a supply system supplying a gaseous fuel, for example natural gas such as, for example, natural gas, liquid propane gas, hydrogen or the like, to regulate the pressure of the gaseous fuel that flows from a source of the pressurised gaseous fuel to a user device such as, for example, an internal combustion engine.

Mechanical pressure regulators are known comprising a body inside which a regulating chamber is obtained.

Inside the regulating chamber a diaphragm or a piston is positioned that divides the regulating chamber into a first chamber, or upper chamber, and into a second chamber, or lower chamber.

Th first chamber is connected to an environment at a reference pressure, for example atmospheric pressure. The second chamber comprises an inlet and an outlet for the gaseous fuel connected respectively to a source and to a user device using gaseous fuel.

Known mechanical regulators further comprise a valve for regulating a flow of gaseous fuel between the inlet and the outlet.

This valve is fixed to a first side of the diaphragm/piston facing the second chamber and is provided with a seat positioned in the second chamber at the inlet.

Known mechanical regulators further comprise a spring positioned in the first chamber and fixed to a second side of the diaphragm/piston facing the first side of the first chamber and opposite the first side.

In use, the spring exerts an elastic force on the diaphragm/piston, which acts on the valve, positioning and maintaining the valve at a certain distance from the seat so as to define a space through which a desired flow of gaseous fuel can flow.

In other words, the spring, by means of the diaphragm/piston, positions the valve in a given work position that corresponds to a desired outlet pressure of the gaseous fuel from the regulator.

A drawback of mechanical regulators and of known methods for regulating the pressure of a fluid is that the outlet pressure from the regulator varies with respect to an objective pressure in the operating field of the regulator, i.e. the outlet pressure varies with the varying of the inlet pressure to the regulator and of a requested flow.

A further drawback of mechanical regulators and of known methods is that they do not enable the aforesaid outlet pressure to be regulated during operation, i.e. they work at a constant nominal outlet pressure that depends on the aforesaid reference pressure.

In fact, this outlet pressure is determined by the work position of the valve, which depends on the elastic force exerted on the latter by the spring by means of the diaphragm/piston.

This elastic force is a function of the features of the spring, of the preload, and in particular of the elastic constant and cannot therefore be modified during operation. A still further limit is that the known mechanical adjusters require periodical calibrating in order to maintain and therefore preserve the original performance.

This is due to the diaphragm, which is subject to temporary alteration and to permanent deformation.

Another drawback is that the regulators cannot be used at low temperatures, in the absence of a heat exchange between the gaseous fuel and a suitable source of heat.

This is due to the diaphragm that, owing to the sensitivity of the diaphragm to temperature, stiffens at low temperatures.

US 2007/057096 discloses A gas valve for feeding gaseous fuel into the combustion chamber of a reciprocating internal combustion engine comprising a movable closing member which cooperates with a seat of the closing element and which can be lifted from the seat to open up by means of a solenoid, a closing spring exerting a resilient force in the direction of said seat onto the closing member, whereby the existing gas pressure exerts a force in the direction of said seat upon the closing member as well, and additional means for at least a temporary creation of a supplemental force biasing the closing member independently from the other effective forces.

SU 598 039 discloses a gas pressure regulator for a gas distribution system with electromagnetic cut-off. The regulator has an outer case with input pipe in which a slide valve is mounted regulating pressure in an output pipe. The regulator is fitted with electromagnet and armature connected by pin to the slide valve.

EP 1 388 658 discloses a feed and control system for an internal combustion engine able to be fed with one or other of two fuels such as petrol and liquid gas or petrol and methane. The engine comprises a plurality of first members for introducing a first fuel into corresponding explosion chambers and a plurality of second members for introducing the second fuel into said explosion chambers. The feed and control system comprises a pressure regulator member arranged to modify the fedd pressure of the second fuel, the pressure regulator member comprising a proportional solenoid valve having a valving element arranged to act on the flow of said second fuel, said valving element being controlled by an actuator the operation of which is subjected to control means at least on the basis of physical parameters related to conditions of said second fuel.

An object of the invention is to improve regulators and methods for regulating the pressure of a fluid.

A further object is to obtain regulators and methods that enable outlet pressure of the fluid from the regulator to be varied during operation.

A still further object is to provide pressure regulators that can be controlled during operation.

Another object is to make pressure regulators that are more reliable and precise than known regulators without the need to resort to periodic calibration during the useful life thereof.

Still another object is to provide pressure regulators that are less sensitive to low temperatures than are known mechanical regulators.

In a first aspect of the invention, a fluid pressure regulator is provided comprising an opening positioned between a first environment at a first pressure and a second environment at a second pressure, valve means for opening/closing said opening for regulating said flow of said fluid from said first environment to said second environment through said opening and first electromagnetic driving means for driving said valve means away from said opening, characterised in that there is provided second electromagnetic driving means for driving said valve means towards said opening.

In a second aspect of the invention, -there is provided a method for driving valve means of a fluid pressure regulator towards, and away from, an opening of said regulator positioned between a first environment and a second environment at a second pressure, so as to open/close said opening for regulating a flow of said fluid between said first environment and said second environment through said opening, comprising a first electromagnetic force on said valve means so as to remove said valve means from said opening, characterised in that also inducing a second electromagnetic force on said valve means is provided so as to take said valve means towards said opening.

Owing to these aspects of the invention, it is possible to provide a regulator and a method for regulating a pressure of a fluid that enable, in operation, said second pressure or outlet pressure to be regulated and varied electronically and in a precise manner.

This is possible owing to said first electromagnetic driving means and to said second electromagnetic driving means, which, by driving by means of said first electromagnetic force and said second electromagnetic force said valve means, enables the latter, in relation to said opening, to be positioned in a plurality of operating positions each corresponding to a desired outlet pressure.

Further, said pressure regulator is more reliable and precise than known mechanical regulators and is also usable at low temperatures.

In fact, said pressure regulator does not use the diaphragm used by the known mechanical regulators, which, as said above, was sensitive to temperature and to alteration over time.

The invention can be better understood and implemented with reference to the attached drawings that illustrate an embodiment thereof by way of non-limiting example, in which:
Figure 1 is a schematic view of a pressurised regulator supplying a gaseous fuel in a supply system supplying a gaseous fuel;
Figure 2 is a schematic longitudinal section of the pressure regulator in Figure 1 in a first work position;
Figure 3 is a section like the one in Figure 2 of the pressure regulator in Figure 1 in a second work position;
Figure 4 is a front schematic view of valve means included in the regulator in Figure 2 and in Figure 3;
Figure 5 is a further front schematic view of the valve means in Figure 2 and in Figure 3;
Figure 6 is a schematic view taken along the direction indicated by the arrow W in Figures 4 and 5 of the valve means in Figure 4 and in Figure 5;
Figure 7 is a schematic view taken along the direction indicated by the arrow T in Figures 4 and 5 of the valve means in Figure 4 and in Figure 5;
Figure 8 is a schematic longitudinal section of a version of the pressure regulator according to the invention.

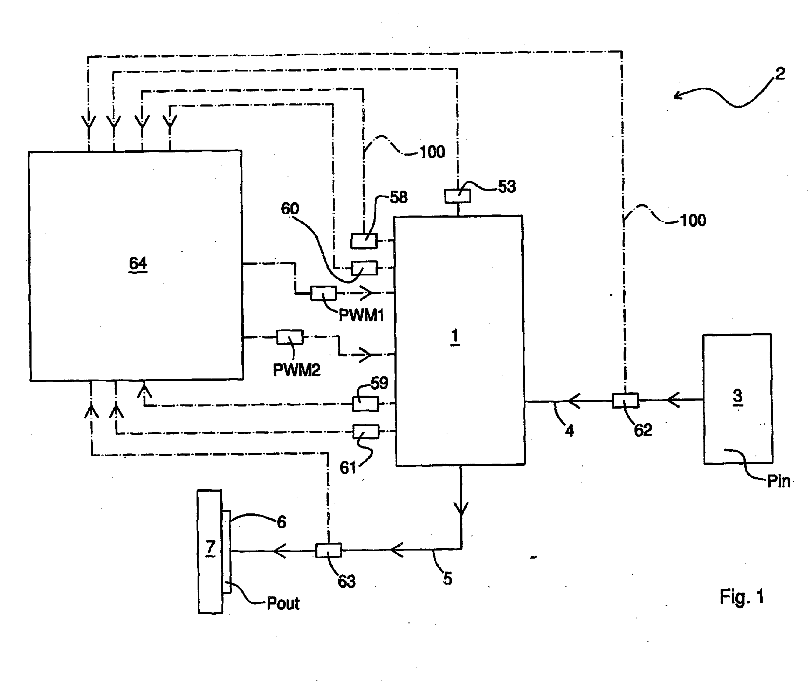

With reference to Figure 1, a supply system 2 is shown for supplying gaseous fuel, for example natural gas such as, for example, liquid propane gas, hydrogen or the like, comprising a tank 3, or bottle, to contain the gaseous fuel at a desired inlet pressure Pin.

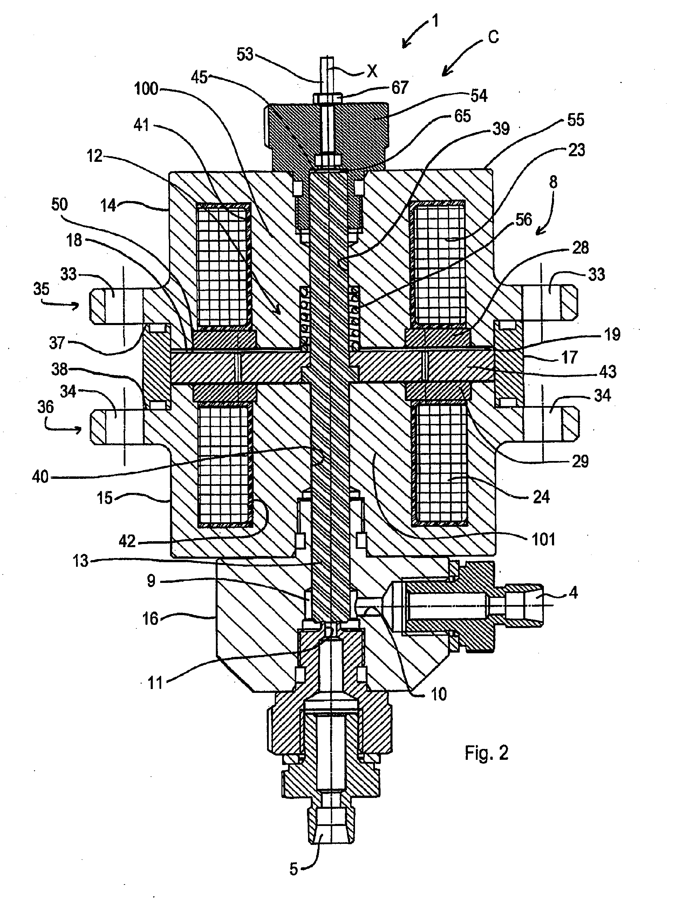

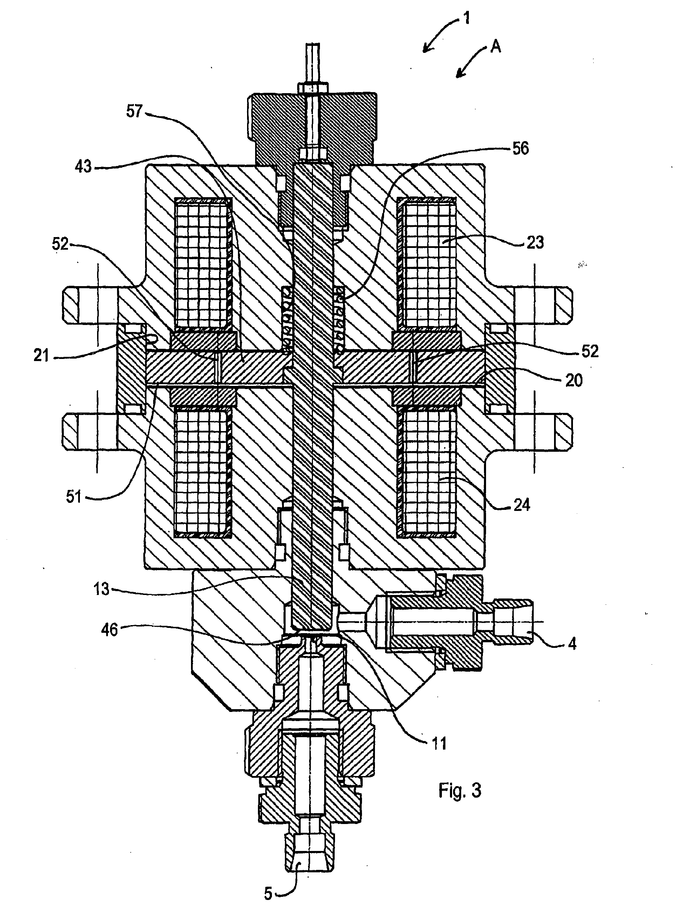

The tank 3 supplies, by means of a first conduit 4, the gaseous fuel at the inlet pressure Pin to a pressure regulator 1 (Figures 2 and 3) that is arranged for supplying, by means of a second conduit 5, gaseous fuel at outlet pressure Pout to fuel dosing means 6, for example injectors of a user device 7 using gaseous fuel, for example an internal combustion engine.

In other words, the regulator 1 is interposed between the tank 3 dosing means and the dosing means 6, receives from the tank 3 the gaseous fuel at an inlet pressure Pin and supplies the gaseous fuel to the dosing means 6 at an outlet pressure Pout.

The regulator 1, illustrated in detail in Figures 2 and 3, is provided with a body 8 comprising a first part 14, a second part 15 and a third part 16, the second part 15 being interposed between the first part 14 and the third part 16. The first part 14 is fixed to the second part 15, for example by a plurality of bolts, which are not shown, engaging in first holes 33 and in second holes 34, the first holes 33 facing the second holes 34, a first flange element respectively obtained in a first flange element 35 of the first part 14 and in a second flange element 36 of the second part 15.

The first part 14 and the second part 15 are maintained at a certain distance from one another and are centred by means of a sealing and centring ring 17, made, for example, of a non-magnetic material.

The sealing and centring ring 17, substantially having the shape of a hollow cylinder, is interposed between the first part 14 and the second part 15 and abuts, in use, on a first abutting surface 37 and a second abutting surface 38, having substantially the shape of a circular crown and mutually facing respectively the first flange element 35 and the second flange element 36.

In this manner, between the first part 14 and the second part 15 there is defined a first chamber 18, having a substantially cylindrical shape, bounded on one side by a first surface 19 of the first part 14, on an opposite side by a second surface 20 of the second part 15, the first surface 19 and the second surface 20 being mutually opposite, and laterally by an internal side surface 21 of the sealing and centring ring 17.

The regulator 1 further comprises cavity means 39, 40 obtained at least partially in the first part 14 and in the second part 15, having a substantially cylindrical shape and extending along a longitudinal axis X of the regulator 1. The first part 14 and the second part 15 are further respectively provided with a first seat 41 and with a second seat 42 extending substantially as a ring around a first support 100 and a second support 101, arranged respectively for receiving a first solenoid 23 and a second solenoid 24. The first part 14 and the second part 15 further comprise respectively a first protecting ring 28 and a second protecting ring 29, both made of non-magnetic material, to protect the first solenoid 23 and the second solenoid 24 from the inlet pressure Pin found, in use, in the first chamber 18.

In particular, the first protecting ring 28 and the second protecting ring 29, which are mutually facing, are interposed respectively between the first solenoid 23 and the first chamber 18 and between the second solenoid 24 and the first chamber 18.

The third part 16, inside which there is obtained a regulating chamber 9, is fixed to the second part 15, for example by a threaded connection..

The regulating chamber 9 is connected to the first conduit 4 and to the second conduit 5, and thus to the tank 3 and to the dosing means 6, respectively by an inlet 10 and an opening 11.

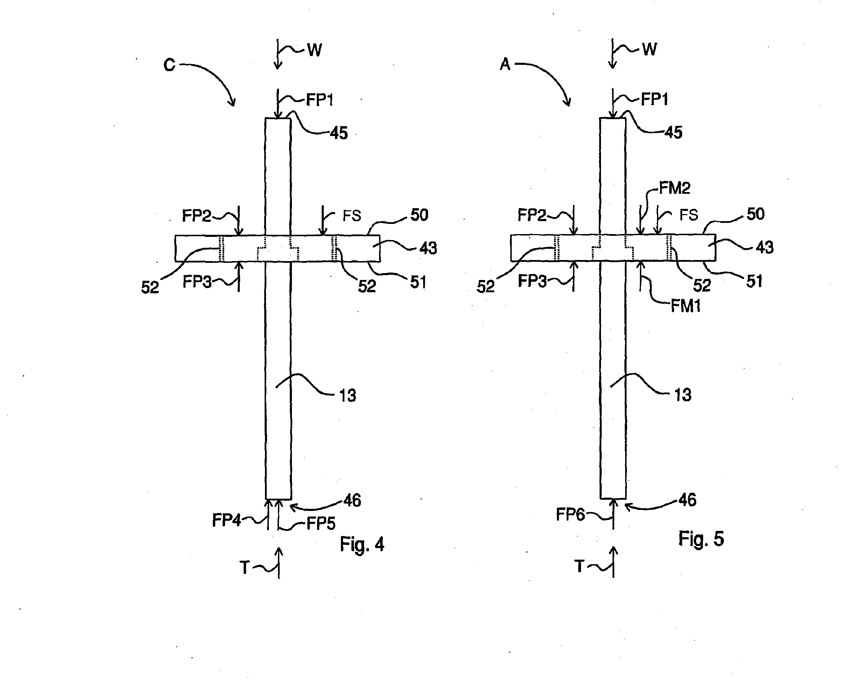

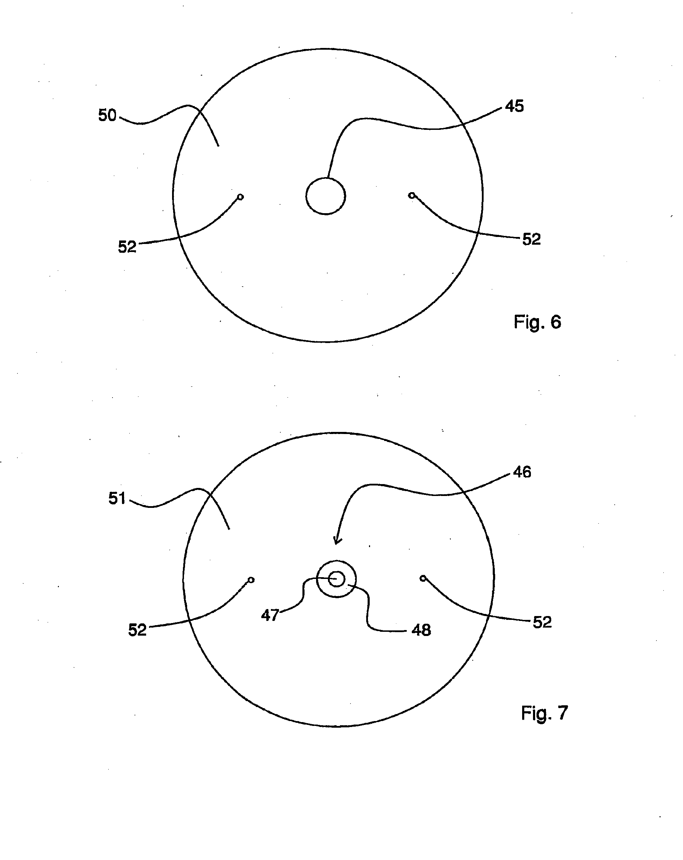

The regulator 1 further comprises valve means 12, shown schematically in Figures 4 to 7, that is movable between a closed position C, shown in Figure 2, and an open position A, shown in Figure 3, in which it respectively prevents/enables a desired flow of gaseous fuel at a desired objective pressure to flow through the opening 11 from the tank 3 to the dosing means 6.

In other words, the valve means 12, suitably driven by the first solenoid 23 and by the second solenoid 24, is arranged for regulating the flow of the gaseous fuel between the tank 3 and the dosing means 6.

The valve means 12 comprises a first element 13, or stem, made, for example, of non-magnetic material and having a substantially cylindrical shape, fixed and extending on sides that are opposite a second element 43 that is substantially disk-shaped.

The stem 13 is slidable inside the first cavity 39 and the second cavity 40 towards and away from the opening 11.

In particular, the stem 13 comprises a first end surface 45 and a second end surface 46, that are mutually opposite and have substantially the same size.

The first end surface 45 faces and bounds on one side a second chamber 65 bound on an opposite side by a supporting element 54 fixed to a third surface 55 of the first part 14, the third surface 55 being opposite the first surface 19.

The second end surface 46 faces the second opening 11 and comprises an internal surface 47 and an external surface 48 that are coaxial, the internal surface 47 being substantially circular in shape and being arranged for occluding the opening 11, the external surface 48 substantially having the shape of a circular crown.

The regulator 1 further comprises first passage means and second passage means, which are not shown, positioned respectively between the stem 13 and the first cavity 39, and between the stem 13 and the second cavity 40 that are suitably dimensioned to enable gaseous fuel to pass through respectively between the regulating chamber 9 and the first chamber 18 and between the first chamber 18 and between the first chamber 18 and the second chamber 65.

The second element 43, in use, is positioned and slidable in the first chamber 18 and comprises a first active surface 50 and a second active surface 51, that are mutually opposite and substantially have the shape of a circular crown.

In particular, the first active surface 50 and the second active surface 51 respectively face the first surface 19 of the first body 14 and the second surface 20 of the second body 15.

Further, the second element 43 comprises a plurality of through holes 52 extending between the first active surface 50 and the second active surface 51, arranged for enabling, , gaseous fuel to pass in a controlled manner, inside the first chamber 18, between the first active surface 50 and the second active surface 51.

The regulator 1 further comprises a spring 56 positioned in a seat 57 obtained in the first cavity 39 and facing the first chamber 18.

In this manner, in use, the spring 56 partially winds the stem 13 and acts on the active surface 50 so as to push the valve means 12 towards the opening 11.

The regulator 1 further comprises a positioning sensor 53, supported by the supporting element 54, arranged to detect, in use, an actual position of the valve means 12, and in particular of the second end surface 46 of the stem 13 with respect to the opening 11.

In particular, the positioning sensor 53 faces the first end surface 45 of the stem 13 and is slidable inside a guiding element 67 fixed to the supporting element 54.

The regulator 1 further comprises a first current sensor 58 and a first magnetic flow sensor 60, connected to the first solenoid 23 by communication lines 100, to detect, in use, a first actual through current and a first actual magnetic flow generated by the first solenoid 23.

The regulator 1 further comprises a second current sensor 59 and a second magnetic flow sensor 61, connected to the second solenoid 24 by the communication lines 100, to detect, in use, a second actual through current and a second actual magnetic flow generated by the second solenoid 24.

The regulator 1 further comprises a first pressure sensor 62 and a second pressure sensor 63 positioned respectively upstream and downstream of the opening 11 to detect the inlet pressure Pin towards and the outlet pressure Pout from the regulator 1.

The regulator 1 further comprises a control and management unit 64 connected to the regulator 1 by the communication lines 100.

The control and management unit 64 is arranged for driving, respectively by a first pulse width cycle PWM1 and a second pulse width cycle PWM2, the first solenoid 23 and the second solenoid 24, which in turn generate and drive by a first electromagnetic force FM1 and a second electromagnetic force FM2 the valve means 12, positioning the latter in an objective position that enables the aforesaid objective pressure exiting the regulator 1 to be obtained.

In an embodiment of the invention which is not illustrated, the regulator 1 can further comprise a cooling plant.

The operation of the control and management unit 64 is disclosed below.

In the control and management unit 64 the fixed or variable objective pressure is entered, which represents a desired operating pressure.

Subsequently, the control and management unit 64 compares the objective pressure with the outlet pressure Pout detected by the second sensor 63.

Still subsequently, the control and management unit 64 processes, according to the inlet pressure Pin detected by the first pressure sensor 62, and according to a possible difference detected by the objective pressure and the outlet pressure Pout detected by the second sensor pressure sensor 63, a first electric signal corresponding to the objective position of the valve means 12 in which it is possible to obtain the aforesaid objective pressure.

Subsequently, the control and management unit 64 processes in function of a possible deviation detected between the objective position and the actual position of the valve means 12 detected by the positioning sensor 53, a second electric signal corresponding to a first objective electromagnetic force and to a second objective electromagnetic force that have to be applied respectively by the first solenoid 23 and by the second solenoid 24 to the valve means 12 to position the latter in the aforesaid objective position.

Still subsequently, the control and management unit 64 processes, in function of a possible deviation detected between the first objective electromagnetic force and a first actual magnetic force of the first solenoid 23 and between the second objective magnetic force and a second actual magnetic force of the second solenoid 24, the first actual magnetic force and the second actual magnetic force being calculated respectively by the first current sensor 58 and the first magnetic flow sensor 60, and by the second current sensor 59 and the second magnetic flow sensor 61, the first cycle PWM1 and the second cycle PWM2 respectively to drive the first solenoid 23 and the second solenoid 24.

The first cycle PWM1 and the second cycle PWM2 control respectively the first solenoid 23 and the second solenoid 24 so that the latter induce on the valve means 12, and in particular on the disc element 53, respectively the first electromagnetic force FM1 and the second electromagnetic force FM2 so as to position the valve means 12 in the objective position for obtaining the desired objective pressure.

The operation of the regulator 1 is disclosed below with reference to Figures 2 to 7, hypothesising that the inlet pressure Pin is greater than the outlet pressure Pout.

In the closed position C, shown in detail in Figure 2, the first solenoid 23 and the second solenoid 24 are not excited and the valve means 12 closes the opening 11.

In the closed position C in the directions indicated by the arrows shown in Figure 4, on the first end surface 45 a first force FP1 acts that is due to the gaseous fuel in the second chamber 65 at the inlet pressure Pin, and on the first active surface 50 respectively an elastic force FS acts that is due to the pressing action exerted by the spring 56 and a second force FP2 that is due to the gaseous fuel in the first chamber 18 at the inlet pressure Pin, the first force FP1, the elastic force FS and the second force FP2 pushing the valve means 12 towards the opening 11.

On the other side, in the closed position C on the second active surface 51 a third force FP3 acts that is due to the gaseous fuel in the first chamber 18 at the inlet pressure Pin, on the external surface 48 of the second end surface 46 a fourth force FP4 acts that is due to the gaseous fuel in the regulating chamber 9 at the inlet pressure Pin, and on the internal surface 47 of the second end surface 46 a fifth force FP5 acts that is due to the gaseous fuel in the second conduit 5 at the outlet pressure Pout, the third force FP3, the fourth force FP4 and the fifth force FP5, pushing the valve means 12 away from the opening 11.

Now, as in the closed position C, the second force FP2 is the same and opposite the third force FP3 and the sum of the modules of the first force FP1 and of the elastic force FS is greater than the sum of the modules of the fourth force FP4 and of the fifth force FP5, the valve means 12 is maintained abutting on the opening 11.

In the open position A, shown in detail in Figure 3, the first solenoid 23 and the second solenoid 24 are excited, and the valve means 12 is lifted with respect to the second opening 11 and enables a flow of gaseous fuel to flow through the opening 11 from the tank 3 to the dosing means 6.

In the open position A, in the directions indicated by the arrows shown in Figure 5, on the first end surface 45 the first force FP1 acts and on the first active surface 50 respectively the elastic force FS, the second force FP2, and the second electromagnetic force FM2, which is induced by the second solenoid 24, act, the first force FP1, the elastic force FS, the second force FP2 and the second electromagnetic force FM2 pushing the valve means 12 towards the opening 11.

On the other side, in the open position A the third force FP3 and the first electromagnetic force FM1, which is induced by the first solenoid 23, act on the second active surface 51, a sixth force FP6 due to the gaseous fuel in the regulating chamber 9 at the inlet pressure Pin acts on the end surface 46, the third force FP3, the sixth force FP6 and the first electromagnetic force FM1, pushing the valve means 12 away from the opening 11.

Now, as the sum of the modules of the first force FP1, of the second force FP2, of the elastic force FS and of the second electromagnetic force FM2 is less than the sum of the modules of the third force FP3, of the sixth force FP6 and of the first force FM1, the valve means 12 is maintained raised, in an objective position that depends on the first electromagnetic force FM1 and on the module of the second electromagnetic force FM2, with respect to the opening 11 so as to obtain the desired objective pressure.

It is particularly advantageous if the spring 56 is sized so that the elastic force FS that it generates by acting on the first active surface 50 has a value such as to compensate for the force FM1 due to the first solenoid 23 that tends to open the valve means 12.

This sizing of the spring 56 enables the control and management unit 64 to be simplified.

In fact, in a regulator 1 such as the one disclosed previously, in which the valve means 12 is controlled by solenoids, instability problems may occur.

In fact, the first solenoid 23 and the second solenoid 24 generate direct forces in the same direction as the movement of the valve means 12, but in an opposite direction. In order to stabilise the system, the control and management unit 64 has to regulate the current in the first solenoid 23 and in the second solenoid 24 so that they generate a force in the opposite direction to the movement of the valve means. This may be complicated because the magnetic forces necessary for moving the valve means 12 depend greatly on the pressure acting in the valve. This may require a management and control unit 64 with a gain depending on the pressure acting in the valve means 12.

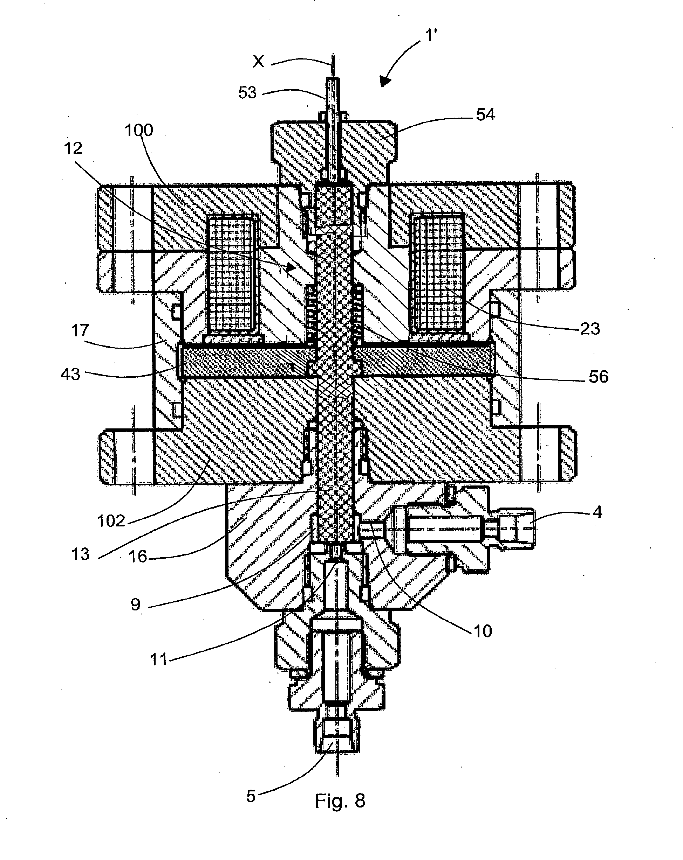

By sizing the spring 56 so that the elastic force FS generated thereby compensates for the force generated by the first solenoid 23 the regulator 1 becomes mechanically stable and it is possible to eliminate the second electromagnet 54, simplifying the structure of the pressure regulator 1, as shown in Figure 8, significantly simplifying the management and control unit 64.

Further, by using a spring 56 of suitable type, for example a Belleville washer, it is finally possible to introduce dampening into the regulator 1.

The pressure regulator 1' illustrated in Figure 8 differs from the pressure regulator 1 illustrated in Figures 1 to 7 through the absence of the second solenoid 24, which simplifies the structure of the pressure regulator 1' and reduces the dimensions thereof compared with the dimensions of the regulator 1.

As can be seen, in the second part 15' of the regulator 1' no seat is provided for housing a second solenoid, the regulator 1' being provided only with the first solenoid 23. The movement of the valve means 12 in the closed position being obtained exclusively through the elastic force FS of the spring 56.

It should be noted that in order to pass rapidly from the open position A to the closed position C, in the case of the regulator 1 illustrated in Figures 1 to 7, it is possible to excite only the second solenoid 24 and not excite the first solenoid 23. If the regulator 1', deexcites the first solenoid 23, the movement from the open position A to the closed position C is ensured by the elastic force FS of the spring 56.

Still in the case of the regulator 1 illustrated in Figures 1 to 7, it should be noted how in an initial opening step of the valve means 12 it is possible to excite only the first solenoid 23 and drive only subsequently the second solenoid 24 to regulate the objective position of the valve means 12. It should also be noted how the first solenoid 23 and the second solenoid 24, suitably controlled by the control and management unit 64, enable the outlet pressure Pout to be regulated and thus regulate the start and duration of the dispensing of gaseous fuel to the dosing means 6.

Further, it should be noted how the regulator 1 can be inserted, and used, in any position in a conduit of the gas, which is not shown, between a supplying device and a user device, or can be used as a regulator for vehicles with motors supplied by fuel batteries, or the pressure of a fluid can be used for regulating the pressure of any fluid. Further, it should be noted how the regulator 1 is managed, in operation, by the control and management unit 64, that enables the outlet pressure Pout to be regulated in a first case and enables the outlet pressure Pout to be varied in electronic mode in a second case.

In the first case the electronic control is able to compensate for possible alterations that may occur during the life of the regulator 1 without the need to resort to periodical calibration.

In the second case the electronic control enables possible alterations to the user device 7 of the gaseous fuel to be compensated for and/or the desired outlet pressure Pout to be supplied to satisfy possible strategies developed by the user device 7.

Further, the electronic control enables possible faults of both the regulator 1 and of the user device 7 to be diagnosed so as to be able to devise a safety strategy.

## Claims

1. Fluid pressure regulator (1; 1') comprising an opening (11) positioned between a first environment (3) at a first pressure (Pin) and a second environment (6) at a second pressure (Pout), valve means (12) for opening/closing said opening (11) for regulating a flow of said fluid between said first environment (3) and said second environment (6) through said opening (11) and first electromagnetic driving means (23) for driving said valve means (12) away from said opening (11), second driving means (24; 56) being provided for driving said valve means (12) towards said opening (11), said fluid pressure regulator further comprising chamber means (18), for receiving a first portion (43) of said valve means (12), which first portion (43) is slidable in said chamber means (18), **characterized in that** said first portion (43) comprises a first active surface (50) and a second active surface (51) that are mutually opposite to each other and respectively face said first electromagnetic driving means (23) and said second driving means (24), and hole means (52) to enable said fluid to pass into said chamber means (18) between said first active surface (50) and said second active surface (51).

2. Regulator (1) according to claim 1, wherein said second driving means is an electromagnetic driving means (24) or a mechanical driving means (56).

3. Regulator (1) according to claim 1, wherein said second driving means is an electromagnetic driving means (24), and wherein said first electromagnetic driving means (23) and said second electromagnetic driving means (24) are positioned mutually opposite to each other respectively in a first part (14) and in a second part (15) of said regulator (1).

4. Regulator (1') according to claim 1, or 3, wherein said second driving means is an electromagnetic driving means (24), wherein said chamber means (18) is interposed between said first electromagnetic driving means (23) and said second electromagnetic driving means (24), and wherein said first portion (43) is made of a material that is sensitive to an electromagnetic force.

5. Regulator (1; 1') according to any one of preceding claims, wherein said valve means (12) comprises a further elongated portion (13) projecting from opposite sides of said first portion (43), wherein said further elongated portion (13) is positioned and is slidable in cavity means (39, 40) provided at least partially in said first part (14) and in said second part (15), and wherein said opening (11) is connected to regulating chamber means (9) interposed between said first environment (3) and said second environment (6), in said regulating chamber means (9) there being positioned an end surface (46) of said further elongated portion (13) arranged for opening/closing said opening (11).

6. Regulator (1; 1') according to claim 5, and comprising:
- further chamber means (65) provided in said first part (14) and facing a further end surface (45) opposite said end surface (46) of said further elongated portion (13); and
- passage means positioned between said further portion (13) and said cavity means (39, 40) to enable said fluid to pass between said regulating chamber means (9) and said chamber means (18) and between said chamber means (18) and said further chamber means (65).

7. Regulator (1) according to any preceding claim, and comprising pushing means (56) acting on said first active surface (50) to push said valve means (12) towards said opening (11).

8. Regulator (1') according to claim 5, or 6, wherein said second mechanical driving means comprises pushing means (56) acting on said first active surface (50) to push said valve means (12) towards said opening (11).

9. Regulator (1; 1') according to any one of claims 5 to 8, and comprising protecting means (28) to protect said first electromagnetic driving means (23) from said first pressure (Pin), interposed between said first electromagnetic driving means (23) and said chamber means (18).

10. Regulator (1) according to claim 9, and comprising further protecting means (29) to protect said second electromagnetic driving means (24) from said first pressure (Pin), said further protecting means (29) being interposed between said second electromagnetic driving means (24) and said chamber means (18).

11. Regulator (1; 1') according to any one of claims 3 to 10, and comprising position sensor means (53), fixed to said first part (14), to detect an actual position of said valve means (12) in relation to said opening (11).

12. Regulator (1; 1') according to any preceding claim, and comprising one or more of the following sensor means: first pressure sensor means (62) positioned upstream of said opening (11) to detect said first pressure (Pin), second pressure sensor means (63) positioned downstream of said opening (11) to detect said second pressure (Pout), first current sensor means (58) to detect a first current passing in said first electromagnetic driving means (23), second current sensor means (59) to detect a second current passing in said second electromagnetic driving means (24), first magnetic flux sensor means (60) to detect a first magnetic flux generated by said first electromagnetic driving means (23), second magnetic flux sensor means (61) to detect a second magnetic flux generated by said second electromagnetic driving means (24).

13. Regulator (1; 1') according to any preceding claim, and comprising a control and management unit (64) arranged for driving said first electromagnetic driving means (23) by a respective pulse width modulating cycle (PWM1).

14. Regulator (1) according to claim 13, wherein said control and management unit (64) drives said second electromagnetic driving means (24) by a respective pulse width modulating cycle (PWM2).

15. Use of a regulator (1; 1') as claimed in any preceding claim, in a supply system supplying a gaseous fuel.

16. Method for driving valve means (12) of a fluid pressure regulator (1; 1') towards, and away from, an opening (11) of said regulator positioned between a first environment (3) at a first pressure (Pin) and a second environment (6) at a second pressure (Pout), so as to open/close said opening (11) for regulating a flow of said fluid between said first environment (3) and said second environment (6) through said opening (11), said fluid pressure regulator comprising chamber means (18), for receiving a first portion (43) of said valve means (12), which first portion (43) is slidable in said chamber means (18) and comprises a first active surface (50) and a second active surface (51) that are mutually opposite to each other and hole means (52) to enable said fluid to pass into said chamber means (18) between said first active surface (50) and said second active surface (51), said method comprising inducing a first electromagnetic force (FM1) on said first portion (43) so as to remove said valve means (12) from said opening (11), wherein also inducing a second electromagnetic force (FM2), or a second mechanical force, on said first portion is provided so as to move said valve means (12) towards said opening (11).

17. Method according to claim 16, wherein before said inducing and said also inducing there is provided detecting said first pressure (Pin) and said second pressure (Pout).

18. Method according to claim 17, wherein after said detecting there is provided comparing an objective pressure of said fluid with said second pressure (Pout).

19. Method according to claim 18, wherein after said comparing there is provided calculating an objective position of said valve means (12) in relation to said opening (11) so as to obtain said objective pressure.

20. Method according to claim 19, wherein after said calculating also detecting an actual position of said valve means (12) with respect to said opening (11) is provided.

21. Method according to claim 20, wherein after said also detecting also comparing said objective position with said actual position is provided.

22. Method according to claim 21, wherein after said also comparing there is provided also calculating a first objective electromagnetic force to be applied to said valve means (12) to position said valve means (12) in said objective position.

23. Method according to claim 22, wherein after said also comparing there is provided further calculating a second objective electromagnetic force to be applied to said valve means (12) to position said valve means (12) in said objective position.

24. Method according to claim 21, or 22, wherein after said also calculating, there is provided further detecting said first electromagnetic force (FM1).

25. Method according to claim 23, or 24, wherein after said further calculating there is provided still further detecting said second electromagnetic force (FM2).

26. Method according to claim 25, wherein after said still further detecting there is provided further comparing said first objective electromagnetic force with said first electromagnetic force (FM1) and said second objective electromagnetic force with said second electromagnetic force (FM2).

27. Method according to claim 26, wherein after said further comparing there is provided further calculating a first pulse width modulation frequency (PWM1) for said first electromagnetic force (FM1) and a second pulse width modulation frequency (PWM2) for said second electromagnetic force (FM2).

## Patentansprüche

1. Flüssigkeitsdruckregler (1; 1'), umfassend eine Öffnung (11), positioniert zwischen einer ersten Umgebung (3) bei einem ersten Druck (Pin) und einer zweiten Umgebung (6) bei einem zweiten Druck (Pout), Ventilmittel (12) zum Öffnen/Schließen der Öffnung (11) zum Regeln eines Flusses dieser Flüssigkeit zwischen der ersten Umgebung (3) und der zweiten Umgebung (6) durch die Öffnung (11) und erste elektromagnetische Antriebsmittel (23) für den Antrieb der Ventilmittel (12), wegführend von der Öffnung (11), zweite Antriebsmittel (24; 56), die für den Antrieb der Ventilmittel (12) hinführend zur Öffnung (11) bereitgestellt sind, wobei der Flüssigkeitsdruckregler zudem Kammermittel (18) umfasst, um einen ersten Abschnitt (43) der Ventilmittel (12) aufzunehmen, wobei dieser erste Abschnitt (43) in den Kammermitteln (18) verschiebbar ist, **dadurch gekennzeichnet, dass** der erste Abschnitt (43) eine erste aktive Oberfläche (50) und eine zweite aktive Oberfläche (51) umfasst, die gegenständig angeordnet sind und jeweils den ersten elektromagnetischen Antriebsmitteln (23) bzw. den zweiten Antriebsmitteln (24) zugewandt sind, sowie Lochmittel (52), die dafür sorgen, dass die Flüssigkeit in die Kammermittel (18) zwischen der ersten aktiven Oberfläche (50) und der zweiten aktiven Oberfläche (51) strömt.

2. Regler (1) nach Anspruch 1, wobei es sich bei den zweiten Antriebsmitteln um elektromagnetische Antriebsmittel (24) oder mechanische Antriebsmittel (56) handelt.

3. Regler (1) nach Anspruch 1, wobei es sich bei den zweiten Antriebsmitteln um elektromagnetische Antriebsmittel (24) handelt und wobei die ersten elektromagnetischen Antriebsmittel (23) und die zweiten elektromagnetischen Antriebsmittel (24) gegenständig angeordnet jeweils in einem ersten Teil (14) und einem zweiten Teil (15) des Reglers (1) positioniert sind.

4. Regler (1') nach Anspruch 1 oder 3, wobei es sich bei den zweiten Antriebsmitteln um elektromagnetische Antriebsmittel (24) handelt, wobei die Kammermittel (18) zwischen den ersten elektromagnetischen Antriebsmitteln (23) und den zweiten elektromagnetischen Antriebsmitteln (24) eingesetzt sind und wobei der erste Abschnitt (43) aus einem Material besteht, das empfindlich auf eine elektromagnetische Kraft ist.

5. Regler (1; 1') nach einem der vorhergehenden Ansprüche, wobei die Ventilmittel (12) einen weiteren verlängerten Abschnitt (13) umfassen, der aus den entgegengesetzten Seiten des ersten Abschnitts (43) hervorsteht, wobei der weitere verlängerte Abschnitt (13) in Hohlraummitteln (39, 40) positioniert und in diesen verschiebbar ist, bereitgestellt mindestens teilweise im ersten Teil (14) und im zweiten Teil (15), und wobei die Öffnung (11) mit Regulierungskammermitteln (9) verbunden ist, die zwischen der ersten Umgebung (3) und der zweiten Umgebung (6) eingesetzt sind, wobei in den Regulierungskammermitteln (9) eine Endoberfläche (46) des weiteren verlängerten Abschnitts (13) positioniert ist, angeordnet zum Öffnen/Schließen der Öffnung (11).

6. Regler (1; 1') nach Anspruch 5, umfassend:
- weitere Kammermittel (65), bereitgestellt im ersten Teil (14) und einer weiteren Endoberfläche (45) zugewandt, die gegenständig zur Endoberfläche (46) des weiteren verlängerten Abschnitts (13) angeordnet ist, und
- Durchflussmittel, positioniert zwischen dem weiteren Abschnitt (13) und den Hohlraummitteln (39, 40), um dafür zu sorgen, dass die Flüssigkeit zwischen den Regulierungskammermitteln (9) und den Kammermitteln (18) und den Kammermitteln (18) und den weiteren Kammermitteln (65) durchströmt.

7. Regler (1) nach einem der vorhergehenden Ansprüche, umfassend Druckmittel (56), die auf die erste aktive Oberfläche (50) wirken, um die Ventilmittel (12) zur Öffnung (11) zu drücken.

8. Regler (1') nach Anspruch 5 oder 6, wobei die zweiten mechanischen Antriebsmittel Druckmittel (56) umfassen, die auf die erste aktive Oberfläche (50) wirken, um die Ventilmittel (12) zur Öffnung (11) zu drücken.

9. Regler (1; 1') nach einem der Ansprüche 5 bis 8, umfassend Schutzmittel (28), um die ersten elektromagnetischen Antriebsmittel (23) vor dem ersten Druck (Pin) zu schützen, eingesetzt zwischen den ersten elektromagnetischen Antriebsmitteln (23) und den Kammermitteln (18).

10. Regler (1) nach Anspruch 9, umfassend weitere Schutzmittel (29), um die zweiten elektromagnetischen Antriebsmittel (24) vor dem ersten Druck (Pin) zu schützen, wobei die weiteren Schutzmittel (29) zwischen den zweiten elektromagnetischen Antriebsmitteln (24) und den Kammermitteln (18) eingesetzt sind.

11. Regler (1; 1') nach einem der Ansprüche 3 bis 10, umfassend Positionssensormittel (53), fixiert am ersten Teil (14), um eine Ist-Position der Ventilmittel (12) im Verhältnis zur Öffnung (11) zu erfassen.

12. Regler (1; 1') nach einem der vorhergehenden Ansprüche, umfassend eins oder mehrere der folgenden Sensormittel: erste Drucksensormittel (62), positioniert stromaufwärts der Öffnung (11), um den ersten Druck (Pin) zu erfassen, zweite Drucksensormittel (63), positioniert stromabwärts der Öffnung (11), um den zweiten Druck (Pout) zu erfassen, erste Stromsensormittel (58), um einen ersten Strom zu erfassen, der in den ersten elektromagnetischen Antriebsmitteln (23) fließt, zweite Stromsensormittel (59), um einen zweiten Strom zu erfassen, der in den zweiten elektromagnetischen Antriebsmitteln (24) fließt, erste magnetische Flusssensormittel (60), um einen ersten magnetischen Fluss zu erfassen, der von den ersten elektromagnetischen Antriebsmitteln (23) erzeugt wird, zweite magnetische Flusssensormittel (61), um einen zweiten magnetischen Fluss zu erfassen, der von den zweiten elektromagnetischen Antriebsmitteln (24) erzeugt wird.

13. Regler (1; 1') nach einem der vorhergehenden Ansprüche, umfassend eine Steuer- und Managementeinheit (64), angeordnet, um die ersten elektromagnetischen Antriebsmittel (23) durch einen jeweiligen Pulsweitenmodulationszyklus (PWM1) zu steuern.

14. Regler (1) nach Anspruch 13, wobei die Steuer- und Managementeinheit (64) die zweiten elektromagnetischen Antriebsmittel (24) durch einen jeweiligen Pulsweitenmodulationszyklus (PWM2) steuert.

15. Einsatz eines Reglers (1; 1') nach einem der vorhergehenden Ansprüche in einem Versorgungssystem zur Einspeisung eines gasförmigen Brennstoffs.

16. Verfahren für den Antrieb von Ventilmitteln (12) eines Flüssigkeitsdruckreglers (1; 1') hinführend zu und wegführend von einer Öffnung (11) des Reglers, positioniert zwischen einer ersten Umgebung (3) bei einem ersten Druck (Pin) und einer zweiten Umgebung (6) bei einem zweiten Druck (Pout), sodass die Öffnung (11) geöffnet/geschlossen wird, um einen Fluss der Flüssigkeit zwischen der ersten Umgebung (3) und der zweiten Umgebung (6) durch die Öffnung (11) zu regeln, wobei der Flüssigkeitsdruckregler Kammermittel (18) umfasst, um einen ersten Abschnitt (43) der Ventilmittel (12) aufzunehmen, wobei dieser erste Abschnitt (43) in den Kammermitteln (18) verschiebbar ist und eine erste aktive Oberfläche (50) und eine zweite aktive Oberfläche (51) umfasst, die gegenständig angeordnet sind, sowie Lochmittel (52), die dafür sorgen, dass die Flüssigkeit in die Kammermittel (18) zwischen der ersten aktiven Oberfläche (50) und der zweiten aktiven Oberfläche (11) strömt, wobei das Verfahren das Induzieren einer ersten elektromagnetischen Kraft (FM1) auf den ersten Abschnitt (43) umfasst, sodass die Ventilmittel (12) von der Öffnung (11) entfernt werden, wobei auch eine Induktion einer zweiten elektromagnetische Kraft (FM2) oder einer zweiten mechanische Kraft auf den ersten Abschnitt bereitgestellt wird, sodass die Ventilmittel (12) zur Öffnung (11) bewegt werden.

17. Verfahren nach Anspruch 16, wobei vor der Induktion und der weiteren Induktion das Erfassen des ersten Drucks (Pin) und des zweiten Drucks (Pout) bereitgestellt wird.

18. Verfahren nach Anspruch 17, wobei nach dem Erfassen das Vergleichen eines objektiven Drucks der Flüssigkeit mit dem zweiten Druck (Pout) bereitgestellt wird.

19. Verfahren nach Anspruch 18, wobei nach dem Vergleichen das Berechnen einer objektiven Position der Ventilmittel (12) im Verhältnis zur Öffnung (11) bereitgestellt wird, sodass der objektive Druck erhalten wird.

20. Verfahren nach Anspruch 19, wobei nach dem Berechnen auch das Erfassen einer Ist-Position der Ventilmittel (12) im Vergleich zur Öffnung (11) bereitgestellt wird.

21. Verfahren nach Anspruch 20, wobei nach dem Erfassen auch das Vergleichen dieser objektiven Position mit der Ist-Position bereitgestellt wird.

22. Verfahren nach Anspruch 21, wobei nach dem Vergleichen auch das Berechnen einer ersten objektiven elektromagnetischen Kraft bereitgestellt wird, die auf die Ventilmittel (12) anzuwenden ist, um die Ventilmittel (12) in der objektiven Position zu positionieren.

23. Verfahren nach Anspruch 22, wobei nach dem Vergleichen das weitere Berechnen einer zweiten objektiven elektromagnetischen Kraft bereitgestellt wird, die auf die Ventilmittel (12) anzuwenden ist, um die Ventilmittel (12) in der objektiven Position zu positionieren.

24. Verfahren nach Anspruch 21 oder 22, wobei nach dem Berechnen das weitere Erfassen der ersten elektromagnetischen Kraft (FM1) bereitgestellt wird.

25. Verfahren nach Anspruch 23 oder 24, wobei nach dem Berechnen das weitere Erfassen der zweiten elektromagnetischen Kraft (FM2) bereitgestellt wird.

26. Verfahren nach Anspruch 25, wobei nach dem noch weiteren Erfassen das weitere Vergleichen der ersten objektiven elektromagnetischen Kraft mit der ersten elektromagnetischen Kraft (FM1) und der zweiten objektiven elektromagnetischen Kraft mit der zweiten elektromagnetischen Kraft (FM2) bereitgestellt wird.

27. Verfahren nach Anspruch 26, wobei nach dem Vergleichen ein weiteres Berechnen einer ersten Pulsweitenmodulationsfrequenz (PWM1) für die erste elektromagnetische Kraft (FM1) und einer zweiten Pulsweitenmodulationsfrequenz (PWM2) für die zweite elektromagnetische Kraft (FM2) bereitgestellt wird.

## Revendications

1. Régulateur de pression de fluide (1; 1') comprenant une ouverture (11) positionnée entre un premier milieu (3) à une première pression (Pin) et un second milieu (6) à une seconde pression (Pout), des moyens de vanne (12) destinés à ouvrir/fermer ladite ouverture (11) servant à régler un écoulement dudit fluide entre ledit premier milieu (3) et ledit second milieu (6) à travers ladite ouverture (11) et des premiers moyens d'entraînement électromagnétiques (23) destinés à entraîner lesdits moyens de vanne (12) loin de ladite ouverture (11), un second moyen d'entraînement (24; 56) étant prévu pour entraîner lesdits moyens de vanne (12) vers ladite ouverture (11), ledit régulateur de pression de fluide comprenant de plus un moyen de chambre (18) destiné à recevoir une première portion (43) desdits moyens de vanne (12), ladite première portion (43) pouvant coulisser dans ledit moyen de chambre (18), **caractérisé en ce que** ladite première portion (43) comprend une première surface active (50) et une seconde surface active (51) étant mutuellement opposées l'une à l'autre et faisant respectivement face au dit premier moyen d'entraînement électromagnétique (23) et au dit second moyen d'entraînement (24), ainsi que des moyens de trou (52) pour permettre au dit fluide de passer dans ledit moyen de chambre (18) entre ladite première surface active (50) et ladite seconde surface active (51).

2. Régulateur (1) selon la revendication 1, dans lequel ledit second moyen d'entraînement est un moyen d'entraînement électromagnétique (24) ou un moyen d'entraînement mécanique (56).

3. Régulateur (1) selon la revendication 1, dans lequel ledit second moyen d'entraînement est un moyen d'entraînement électromagnétique (24) et dans lequel ledit premier moyen d'entraînement électromagnétique (23) et ledit second moyen d'entraînement électromagnétique (24) sont respectivement positionnés de façon mutuellement opposée l'un par rapport à l'autre dans une première partie (14) et dans une seconde partie (15) dudit régulateur (1).

4. Régulateur (1') selon les revendications 1 ou 3, dans lequel ledit second moyen d'entraînement est un moyen d'entraînement électromagnétique (24), dans lequel ledit moyen de chambre (18) est interposé entre ledit premier moyen d'entraînement électromagnétique (23) et ledit second moyen d'entraînement électromagnétique (24), et dans lequel ladite première portion (43) est fabriquée dans un matériau étant sensible à une force électromagnétique.

5. Régulateur (1 ; 1') selon l'une quelconque des revendications précédentes, dans lequel lesdits moyens de vanne (12) comprennent une portion allongée supplémentaire (13) dépassant des côtés opposés de ladite première portion (43), dans lequel ladite portion allongée supplémentaire (13) est positionnée et peut coulisser dans un moyen de cavité (39, 40) prévu au moins partiellement dans ladite première partie (14) et dans ladite seconde partie (15), et dans lequel ladite ouverture (11) est reliée au moyen de chambre de régulation (9) interposé entre ledit premier milieu (3) et ledit second milieu (6), une surface d'extrémité (46) de ladite portion allongée supplémentaire (13) étant positionnée dans ledit moyen de chambre de régulation (9) pour ouvrir/fermer ladite ouverture (11).

6. Régulateur (1; 1') selon la revendication 5, et comprenant:
- un moyen de chambre supplémentaire (65) prévu dans ladite première partie (14) et faisant face à une surface d'extrémité supplémentaire (45) opposée à ladite surface d'extrémité (46) de ladite portion allongée supplémentaire (13); et
- un moyen de passage positionné entre ladite portion supplémentaire (13) et ledit moyen de cavité (39, 40) pour permettre au dit fluide de passer entre ledit moyen de chambre de régulation (9) et ledit moyen de chambre (18) et entre ledit moyen de chambre (18) et ledit moyen de chambre supplémentaire (65).

7. Régulateur (1) selon l'une quelconque des revendications précédentes, et comprenant des moyens de poussée (56) agissant sur ladite première surface active (50) pour pousser lesdits moyens de vanne (12) vers ladite ouverture (11).

8. Régulateur (1) selon les revendications 5 ou 6, dans lequel ledit second moyen d'entraînement mécanique comprend des moyens de poussée (56) agissant sur ladite première surface active (50) pour pousser lesdits moyens de vanne (12) vers ladite ouverture (11).

9. Régulateur (1 ; 1') selon l'une quelconque des revendications de 5 à 8, et comprenant des moyens de protection (28), destinés à protéger ledit premier moyen d'entraînement électromagnétique (23) de ladite première pression (Pin), interposés entre ledit premier moyen d'entraînement électromagnétique (23) et ledit moyen de chambre (18).

10. Régulateur (1) selon la revendication 9, et comprenant des moyens de protection supplémentaires (29) destinés à protéger ledit second moyen d'entraînement électromagnétique (24) de ladite première pression (Pin), lesdits moyens de protection supplémentaires (29) étant interposés entre ledit second moyen d'entraînement électromagnétique (24) et ledit moyen de chambre (18).

11. Régulateur (1 ; 1') selon l'une quelconque des revendications de 3 à 10, et comprenant des moyens de détection de position (53), fixés à ladite première partie (14), pour détecter une position effective desdits moyens de vanne (12) par rapport à ladite ouverture (11).

12. Régulateur (1; 1') selon l'une quelconque des revendications précédentes, et comprenant un ou plusieurs des moyens de détection suivants : un premier moyen de détection de pression (62) positionné en amont de ladite ouverture (11) pour détecter ladite première pression (Pin), un second moyen de détection de pression (63) positionné en aval de ladite ouverture (11) pour détecter ladite seconde pression (Pout), un premier moyen de détection de courant (58) pour détecter un premier courant passant dans ledit premier moyen d'entraînement électromagnétique (23), un second moyen de détection de courant (59) pour détecter un second courant passant dans ledit second moyen d'entraînement électromagnétique (24), un premier moyen de détection de flux magnétique (60) pour détecter un premier flux magnétique généré par ledit premier moyen d'entraînement électromagnétique (23), un second moyen de détection de flux magnétique (61) pour détecter un second flux magnétique généré par ledit second moyen d'entraînement électromagnétique (24).

13. Régulateur (1; 1') selon l'une quelconque des revendications précédentes, et comprenant une unité de gestion et de commande (64) disposée pour entraîner ledit premier moyen d'entraînement électromagnétique (23) par un cycle de modulation de largeur d'impulsion correspondant (PWM1).

14. Régulateur (1) selon la revendication 13, dans lequel ladite unité de gestion et de commande (64) entraîne ledit second moyen d'entraînement électromagnétique (24) par un cycle de modulation de largeur d'impulsion correspondant (PWM2).

15. Utilisation d'un régulateur (1; 1') selon l'une quelconque des revendications précédentes, dans un système d'alimentation fournissant un combustible gazeux.

16. Procédé destiné à entraîner des moyens de vanne (12) d'un régulateur de pression de fluide (1; 1') en les rapprochant ou en les éloignant d'une ouverture (11) dudit régulateur positionné entre un premier milieu (3) à une première pression (Pin) et un second milieu (6) à une seconde pression (Pout), de sorte à ouvrir/fermer ladite ouverture (11) pour régler un écoulement dudit fluide entre ledit premier milieu (3) et ledit second milieu (6) à travers ladite ouverture (11), ledit régulateur de pression de fluide comprenant un moyen de chambre (18), destiné à recevoir une première portion (43) desdits moyens de vanne (12), ladite première portion (43) pouvant coulisser dans ledit moyen de chambre (18) et comprend une première surface active (50) ainsi qu'une seconde surface active (51) étant mutuellement opposées l'une à l'autre et des moyens de trou (52) pour permettre au dit fluide de passer dans ledit moyen de chambre (18) entre ladite première surface active (50) et ladite seconde surface active (51), ledit procédé comprenant l'induction d'une première force électromagnétique (FM1) sur ladite première portion (43) de sorte à retirer lesdits moyens de vanne (12) de ladite ouverture (11), dans lequel il est aussi prévu l'induction d'une seconde force électromagnétique (FM2) ou une seconde force mécanique, sur ladite première portion de manière à déplacer lesdits moyens de vanne (12) vers ladite ouverture (11).

17. Procédé selon la revendication 16, dans lequel il est prévu, avant lesdites inductions, de détecter ladite première pression (Pin) et ladite seconde pression (Pout).

18. Procédé selon la revendication 17, dans lequel il est prévu, après ladite détection, de comparer une pression objective dudit fluide avec ladite seconde pression (Pout).

19. Procédé selon la revendication 18, dans lequel il est prévu, après ladite comparaison, de calculer une position objective desdits moyens de vanne (12) par rapport à ladite ouverture (11) de sorte à obtenir ladite pression objective.

20. Procédé selon la revendication 19, dans lequel il est aussi prévu, après ledit calcul, de détecter une position effective desdits moyens de vanne (12) par rapport à ladite ouverture (11).

21. Procédé selon la revendication 20, dans lequel il est aussi prévu, après ladite détection, de comparer ladite position objective avec ladite position effective.

22. Procédé selon la revendication 21, dans lequel il est aussi prévu, après ladite comparaison, de calculer une première force électromagnétique objective à appliquer auxdits moyens de vanne (12) pour positionner lesdits moyens de vanne (12) dans ladite position objective.

23. Procédé selon la revendication 22, dans lequel il est prévu de plus, après ladite comparaison, de calculer une seconde force électromagnétique objective à appliquer auxdits moyens de vanne (12) pour positionner lesdits moyens de vanne (12) dans ladite position objective.

24. Procédé selon les revendications 21 ou 22, dans lequel il est de plus prévu, après ledit calcul supplémentaire, de détecter ladite première force électromagnétique (FM1).

25. Procédé selon les revendications 23 ou 24, dans lequel il est encore prévu, après ledit calcul supplémentaire, de détecter ladite seconde force électromagnétique (FM2).

26. Procédé selon la revendication 25, dans lequel il est aussi prévu, après ladite détection supplémentaire, de comparer ladite première force électromagnétique objective avec ladite première force électromagnétique (FM1) et ladite seconde force électromagnétique objective avec ladite seconde force électromagnétique (FM2).

27. Procédé selon la revendication 26, dans lequel il est de plus prévu, après ladite comparaison supplémentaire, de calculer une première fréquence de modulation de largeur d'impulsion (PWM1) pour ladite première force électromagnétique (FM1) et une seconde fréquence de modulation de largeur d'impulsion (PWM2) pour ladite seconde force électromagnétique (FM2).
